# DEMANDE DE BREVET EUROPEEN

(11) **EP 2 527 043 A1**
(43) Date de publication de la demande: **28.11.2012**
(21) Numéro de dépôt: 11167171.5
(22) Date de dépôt: 23.05.2011
(51) Int. Cl.: B05B 13/02, B65G 47/244

(54) **Dispositif de support et d'entrainement en rotation de pièces devant subir un traitement de surface et installation mettant en ?uvre un tel dispositif**

(71) Demandeur: ACINOV, 01360 Bressolles (FR)
(72) Inventeur: Chrmes, Michel, 01360 Bressoles (FR); Aorte, Christian, 01360 Bressoles (FR)
(74) Mandataire: Le Cacheux, Samuel L.R.

(57) **Abrégé**

L'invention concerne un dispositif de support et d'entrainement en rotation de plusieurs pièces devant subir un traitement de surface, destiné être adapté de manière amovible sur un dispositif de transport (**5**) d'une installation de traitement de surface, dispositif de support et d'entraînement caractérisé en ce qu'il comprend un châssis (**20**) comprenant : des moyens d'adaptation (**21**) destinés à être montés de manière amovible sur des moyens d'adaptation complémentaires (**11**) du dispositif de transport (**5**), et au moins deux tourillons (**23**) mobiles en rotation selon un axe vertical (**Δ'**) par rapport au châssis (**20**), chaque tourillon (**23**) comprenant : en partie inférieure, un pied d'entraînement en rotation qui est accessible depuis l'extérieur en dessous du châssis (**20**) et qui destiné à coopérer avec une tête d'entrainement complémentaire (**13**) d'une tournette (**12**) du dispositif de transport (**5**), et, en partie supérieure, une tête de support (**30**) qui accessible depuis l'extérieur au niveau du dessus du châssis (**20**) et qui est destinée à recevoir une pièce à traiter et/ou un accessoire de support d'une pièce à traiter.

## Description

La présente invention concerne le domaine technique des installations d'application de traitement de surface sur des pièces métalliques et/ou plastiques de taille moyenne ou de petite taille, par exemple, de l'ordre de quelques centimètres à quelques dizaines de centimètres.

Dans le domaine de la fabrication de pièces métallisées en matière plastique pour l'industrie automobile, cosmétique ou autre, comme par exemple des bouchons, des capuchons de bouteilles de parfum, la pièce en matière plastique brute doit, le plus souvent, tout d'abord recevoir une couche d'accroche pour l'application d'un film métallique par dépôt sous vide. Une fois le film métallique déposé, la pièce reçoit ensuite une couche d'un vernis protecteur. Les couches d'apprêt et de vernis sont généralement déposées par pulvérisation avant de subir un séchage dans un four dans le cadre d'un traitement en continu sur une ligne automatisée tandis que l'application du film métallique s'effectue dans le cadre d'un traitement par lots dans une chambre de traitement sous vide ad hoc. La fabrication et, plus particulièrement, la finition des pièces en plastique fait donc intervenir, le plus souvent, une séquence de préparation par application d'une couche d'accroche, puis une séquence de métallisation pour finir par une séquence de vernissage.

La ligne automatisée comprend généralement un convoyeur comportant une série de tournettes animées d'un mouvement de rotation sur elles-mêmes et déplacées en translation à l'intérieur successivement d'une chambre de pulvérisation et d'un four de séchage. Ainsi, en amont d'une chambre de pulvérisation de la couche d'accroche, des opérateurs placent les pièces à traiter chacune à l'extrémité supérieure d'une tournette soit directement, soit par l'intermédiaire d'un porte pièce amovible, pour ensuite les retirer, seules ou avec le porte pièce, en aval du four de séchage et préparer les lots pour la métallisation. Après la métallisation les opérateurs placent à nouveau les pièces à traiter, et leur éventuel porte-pièce, sur les tournettes en amont d'une chambre de pulvérisation de la couche de vernis.

La manipulation des pièces, et de leur éventuel porte-pièce, entre la séquence de préparation et la séquence de vernissage requiert une main-d'oeuvre importante effectuant des tâches répétitives peu gratifiantes. De plus, le film métallique est avant son vernissage particulièrement fragile de sorte que la manipulation à la main des pièces avant vernissage présente d'importants risques de dégradation du film induisant des défauts entraînant un rebut des pièces fabriquées.

Il est donc apparu le besoin de moyens permettant de s'affranchir de la manipulation des pièces entre les phases de préparation et de vernissage afin de réduire le recours à des d'opérateurs et le risque de détérioration des pièces.

Afin d'atteindre cet objectif, l'invention concerne un dispositif de support et d'entrainement en rotation de plusieurs pièces devant subir un traitement de surface, destiné être adapté de manière amovible sur un dispositif de transport d'une installation de traitement de surface, dispositif de support et d'entraînement caractérisé en ce qu'il comprend un châssis comprenant :
- des moyens d'adaptation destinés à être montés de manière amovible sur des moyens d'adaptation complémentaires du dispositif de transport,
- et au moins deux tourillons mobiles en rotation selon un axe vertical par rapport au châssis, chaque tourillon comprenant :
   - en partie inférieure, un pied d'entraînement en rotation qui est accessible depuis l'extérieur du châssis et qui destiné à coopérer avec une tête d'entrainement complémentaire d'une tournette du dispositif de transport,
   - et, en partie supérieure, une tête de support qui accessible depuis l'extérieur du châssis et qui est destinée à recevoir une pièce à traiter et/ou un accessoire de support d'une pièce à traiter.

La mise en oeuvre d'un tel dispositif de support et d'entraînement permet de déplacer plusieurs pièces à traiter en une seule opération réduisant ainsi le temps et la main-d'oeuvre nécessaire au chargement/déchargement des pièces sur l'installation de traitement. De plus, le dispositif de support et d'entraînement constitue un moyen de préhension qui réduit les risques de choc et donc de détérioration des pièces lors de leur manipulation après application de la couche d'accroche ainsi qu'après application du film métallique et du vernissage de finition avant séchage.

Selon une caractéristique de l'invention, afin de s'affranchir autant que faire se peut de l'intervention d'opérateurs entre les phases de préparation et de vernissage, le châssis peut comprendre des moyens de préhension pour un système automatisé de mise en place/retrait du dispositif de support et d'entraînement sur un dispositif de transport correspondant.

Selon une forme de réalisation du dispositif de support et d'entraînement conforme à l'invention, les moyens d'adaptations du châssis sont destinés à emboîter les moyens d'adaptation complémentaires selon un axe d'emboitement vertical.

Selon les caractéristiques de cette forme de réalisation afin de faciliter la mise en relation des moyens de support et des moyens d'entraînement en rotation lors du montage du dispositif de support et d'entraînement sur le dispositif de transport correspondant, l'axe d'emboîtement des moyens d'adaptation et les axes de rotation des tourillons sont sensiblement alignés selon un plan vertical.

Selon l'invention la liaison en rotation entre chaque tourillon et la tournette correspondante peut être réalisée de toute manière appropriée et notamment par simple adhérence. Selon une variante de réalisation de l'invention visant à empêcher ou à limiter le glissement relatif entre chaque tourillon et la tournette correspondante de manière à garantir une homogénéité de traitement de la pièce portée par le tourillon, chaque tourillon comprend au niveau du pied d'entraînement des moyens de liaison positive en rotation avec la tête d'entrainement complémentaire de la tournette correspondante.

Selon l'invention la liaison entre le pied d'entraînement du tourillon et la tête d'entraînement de la tournette correspondante peut être réalisée de toute façon appropriée, par exemple, par simple contact de surface perpendiculaire à l'axe de rotation présentant éventuellement des conformations complémentaires ou encore par emboîtement de parties mâle et femelle. Ainsi selon une variante de réalisation du dispositif support et d'entraînement conforme à l'invention, chaque tourillon comprend un pied d'entrainement creux qui définit une chambre d'emboîtement de la tête d'entraînement de la tournette correspondante. Un tel mode de réalisation évite un encrassement du pied d'entraînement lors du passage du dispositif de support et d'entraînement dans une enceinte d'application d'un film métallique sous vide. De plus, ce mode de réalisation permet de réduire au maximum la hauteur des tourillons. Par ailleurs, le pied des tourillons peut alors se trouver en partie au moins à l'intérieur du châssis ce qui permet également de réduire la hauteur du dispositif de support et d'entraînement.

Dans le cadre de cette variante de réalisation et afin de garantir un parfait entraînement en rotation des tourillons par les tournettes, chaque tourillon comprend à l'intérieur de la chambre, en tant que moyens de liaison positive en rotation, au moins une surface inclinée par rapport à l'axe de rotation du tourillon et destinée à coopérer avec une surface complémentaire d'un biseau de la tête d'entraînement de la tournette.

Selon une autre variante de réalisation visant à permettre un contrôle de la qualité des traitements de surface réalisés sur les pièces portées par les tourillons en maîtrisant, à une marge d'erreur près, le nombre de tours effectués par les tourillons chaque tourillon comprend des moyens d'indexation en rotation.

Les moyens d'indexation en rotation peuvent être réalisés de toutes manières appropriées. Ainsi, chaque tourillon peut comprendre, en tant que moyens d'indexation, au moins un méplat qui est aménagé au niveau de la tête de support et qui s'entend selon un plan vertical.

Selon une variante de réalisation de l'invention visant à réduire les frottements liés à la rotation des tourillons, le châssis comprend pour chaque tourillon un alésage traversant de réception d'une bague de guidage à l'intérieur de laquelle est engagée le tourillon.

Selon l'invention le tourillon peut être réalisé en tout matériau approprié tel que par exemple en métal ou en matière plastique. Selon une variante de réalisation de l'invention, la bague de guidage et le tourillon sont réalisés en matière plastique, la bague étant engagée à force dans l'alésage traversant et le tourillon étant adapté pour être engagé à force dans la bague et pour qu'après l'engagement le tourillon se trouve lié à la bague en translation axiale et libre en rotation axiale par rapport à cette dernière. Ainsi, la bague de guidage et/ou le tourillon peuvent être changés facilement en tant que de besoin en fonction de leur usure et ou de leur encrassement.

L'invention concerne également une installation de traitement de surface de pièces comprenant un convoyeur destiné à déplacer les pièces à traiter en translation dans au moins une unité de traitement. Selon l'invention, le convoyeur comprend au moins un dispositif de transport équipé de manière amovible d'au moins un dispositif de support et d'entraînement conforme à l'invention. À cet effet, chaque dispositif de transport comprend des moyens d'adaptation d'au moins un dispositif de support et d'entraînement et des tournettes comprenant chacune tête d'entraînement destinée à coopérer avec le pied d'entraînement d'un tourillon du dispositif de support.

Selon une variante de réalisation de l'installation conforme à l'invention, les moyens d'adaptation d'un dispositif de support et d'entraînement comprennent au moins deux doigts verticaux sur lesquels le dispositif de support est destiné à venir s'emboiter selon un mouvement vertical.

Selon une autre variante de réalisation de l'installation conforme à l'invention, l'installation peut comprendre un système automatisé de mise en place/retrait du dispositif de support et d'entraînement sur un dispositif de transport correspondant.

Bien entendu, les différentes caractéristiques, variantes et formes de réalisation du dispositif de support et d'entraînement et d'installation conformes à l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives de réalisation d'un dispositif de support et d'entraînement et d'une installation de traitement de surface conformes à l'invention.
- La figure 1 est une vue schématique d'une installation de traitement de surface de pièces conforme à l'invention.
- La figure 2 est une élévation partiellement arrachée d'un dispositif de transport mis en oeuvre dans l'installation illustrée figure 1 et destiné à recevoir un dispositif de support et d'entraînement illustré à la figure 3.
- La figure 3 est élévation partiellement arrachée d'un dispositif de support et d'entraînement conforme à l'invention et mis en oeuvre dans l'installation illustrée figure 1.
- La figure 4 est une élévation, analogue aux figures 2 et 3, montrant le dispositif de support et d'entraînement, de la figure 3, adapté sur le dispositif de transport de la figure 2.
- La figure 5 est une vue de dessus selon la ligne V-V de la figure 4.
- La figure 6 est une coupe axiale schématique montrant une autre forme de réalisation d'un tourillon d'un dispositif de support et d'entraînement selon l'invention et, notamment, de son pied d'entraînement et de la tête d'entraînement de la tournette correspondante.
- La figure 7 est une vue schématique d'encore une autre forme de réalisation d'un tourillon constitutif d'un dispositif de support et d'entraînement selon l'invention.

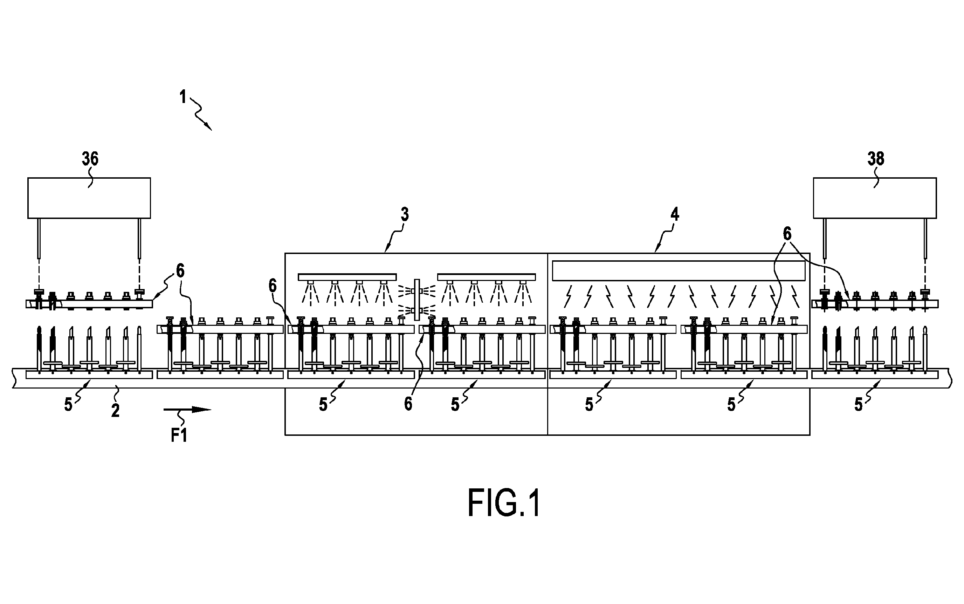

Une installation de traitement de surface de pièces selon l'invention, telle qu'illustrée à la figure **1** et désigné dans son ensemble par la référence **1,** comprend un convoyeur **2** destiné à déplacer les pièces à traiter, non représentées, dans au moins une unité **3** d'application d'un agent de traitement de surface. Selon l'exemple illustré, l'unité **3** est adaptée pour assurer l'application par pulvérisation d'un agent de traitement tel que par exemple une couche d'accroche en préparation d'un dépôt de film métallique sous vide. L'unité **3** est suivie, selon le sens de déplacement du convoyeur **2** tel qu'illustré par la flèche **F1,** par une unité **4** de séchage. L'unité 4 peut être une unité de séchage par chauffage, par exemple à infrarouge, ou encore une unité de séchage à ultra-violets.

Afin d'assurer le transport et la mise en rotation des pièces à traiter, le convoyeur **2** comprend une série de dispositifs de transport **5** qui sont solidaires dudit convoyeur **2** et qui sont chacun destinés à recevoir un dispositif amovible **6** de support et d'entraînement en rotation de plusieurs pièces à traiter.

Selon l'invention, chaque dispositif de transport **5** comprend, comme le montre la figure 2, un corps **10** qui est destiné à être adapté sur le convoyeur **2** de manière à être entraîné en translation par ce dernier. Le corps **10** est, selon l'exemple illustré, réalisé sous la forme d'une barre allongée qui présente à proximité chacune de ses extrémités des moyens **11** d'adaptation d'un dispositif de support **6.** Dans le cas présent les moyens d'adaptation **11** sont réalisés sous la forme de deux doigts centreurs s'étendant chacun selon un axe vertical **A.** Le corps **10** porte entre les doigts **11** au moins deux et, selon l'exemple illustré, cinq tournettes **12** chacune mobile, par rapport au corps **10,** en rotation selon un axe vertical **Δ**. Selon l'exemple illustré, les axes verticaux **A** et les axes de rotation **Δ** sont alignées dans un même plan vertical. Bien entendu, le dispositif de transport **5** pourrait comprendre plus ou moins de cinq tournettes selon la configuration des dispositifs de support et d'entraînement **6** qu'il est destiné à recevoir de manière amovible. Chaque tournette **12** comprend au niveau de son extrémité supérieure, à l'opposé du corps **10,** une tête d'entraînement **13** dont la fonction apparaîtra par la suite. Chaque tournette **12** comprend en outre dans sa partie inférieure un pignon **14** d'entraînement en rotation destiné à coopérer avec les chaînes d'entraînement présentes sur l'installation **1,** comme cela est connu de l'homme du métier et ne nécessite donc pas ici de plus ample description.

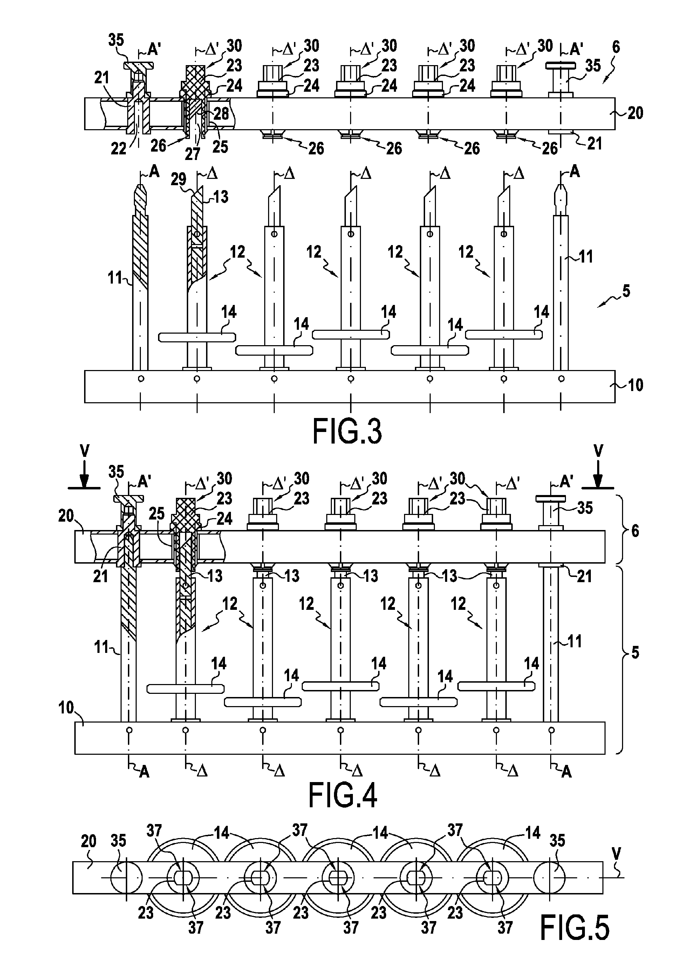

Selon l'invention, chaque dispositif de support et d'entraînement **6** comprend, comme le montre la figure **3****,** un châssis **20** qui selon l'exemple illustré est réalisé sous la forme d'une barre tubulaire rectiligne, étant entendu que le châssis **20** pourrait être réalisé de toute autre manière appropriée. Le châssis **20** comprend des moyens d'adaptation **21** complémentaires des moyens d'adaptation **11** du dispositif de transport **5.** Selon l'exemple illustré, les moyens d'adaptation **21** sont formés par deux douilles de centrage qui sont chacune adaptée à proximité d'une extrémité du châssis **20** et qui présente chacune un alésage **22** d'axe vertical **A'** débouchant en partie basse. Les alésages **22** des douilles de centrage **21** sont destinés à venir s'emboîter sur les doigts centreurs 11 selon un mouvement vertical vers le bas.

Le châssis **20** comprend en outre au moins deux et, selon l'exemple illustré, cinq tourillons **23** qui sont chacun mobile en rotation par rapport au châssis **20** selon un axe vertical **Δ'**. Selon l'exemple illustré, les axes de rotation **Δ'** et verticaux **A'** sont alignés selon un même plan vertical **V.** Bien entendu, le châssis **20** pourrait comprendre plus ou moins de cinq tourillons **23** en fonction de la taille des pièces que ces derniers seront amenés à recevoir. Dans le cas présent, chaque tourillon **23** est maintenu par une bague de guidage **24** réalisée en matière plastique et engagée à force un alésage traversant **25** du châssis **20.** Chaque tourillon **23** est alors également réalisé en matière plastique et se trouve aussi engagé à force dans la bague de guidage **24** correspondante. Ainsi, chaque ensemble bague de guidage **24** et tourillon **23** peut facilement être démonté et remplacé selon leur degré d'usure ou d'encrassement. Il doit être remarqué que la bague de guidage **24** et le tourillon **23** sont réalisés pour qu'après engagement du tourillon dans la bague, le tourillon se trouve lié à la bague en translation mais libre, par rapport à cette dernière, en rotation axiale.

Chaque tourillon **23** comprend en partie inférieure un pied **26** d'entraînement en rotation qui est accessible depuis l'extérieur en dessous du châssis **20.** Le pied d'entraînement **26** est destiné à coopérer avec la tête d'entraînement **13** d'une tournette **12** correspondante. Selon l'exemple illustré, chaque pied d'entraînement **26** est creux de manière à définir une chambre **27** d'emboîtement pour la tête d'entraînement **13.** Dans le cas présent, le pied **26** se trouve en grande partie à l'intérieur du châssis **20.** Afin de garantir un entraînement sans glissement du tourillon **23** par la tournette **12** correspondante, il est mis en oeuvre des moyens de liaison positive en rotation qui, dans le cas présent, comprennent, d'une part, à l'intérieur de la chambre une surface **28** inclinée par rapport à l'axe **Δ'** et, d'autre part, au niveau de la tête d'entraînement **13,** un biseau **29** inclinée par rapport à l'axe **Δ**. Lors de l'emboîtement de la chambre **27** sur la tête **13,** la surface du biseau **29** vient en appui contre la surface **28** assurant ainsi une liaison en rotation positive entre la tournette **12** et le tourillon **23.**

Chaque tourillon **23** comprend en partie supérieure une tête de support 30 qui est accessible depuis l'extérieur du châssis **20** au niveau du dessus de ce dernier. La tête de support **30** est alors destinée à recevoir une pièce à traiter qui y est adaptée soit directement soit par l'intermédiaire d'un accessoire de support. Le mode de réalisation et d'adaptation de la pièce à traiter ou de son accessoire de support sont largement connues de l'homme du métier et ne nécessitent donc pas de plus amples explications dans le cadre de la présence description.

Des dispositifs de support et d'entraînement en rotation **6** tels qu'ainsi constitués sont mis en oeuvre dans le cadre de l'installation **1** de la manière suivante.

Tout d'abord, des pièces à traiter sont adaptées de manière amovible sur des têtes de support **30** de tourillons des dispositifs de support **6.** Ensuite, chaque dispositif de support **6,** ainsi chargé, est adapté par emboîtement selon un mouvement vertical vers le bas sur un dispositif de transport correspondant **5.** Afin de faciliter cette opération, chaque dispositif de support **6** peut comprendre des moyens de préhension tels que des pions **35** pour une prise en charge par un système automatisé de chargement **36** équipant l'installation **1.**

Les dispositifs de support **5** sont alors transportés en translation par le convoyeur **2** au travers de l'unité d'application **3** puis de l'unité de séchage **4.** Pendant ce déplacement en translation, les pignons **14** des tournettes **12** sont entraînés en rotation par des systèmes de chaîne ad hoc. Ainsi, compte tenu de la liaison rotation des tournettes **12** avec les tourillons **23,** les pièces portées par ces derniers subissent un mouvement de rotation combiné à une translation. Cette combinaison de mouvement garantit une homogénéité d'application de l'agent de traitement de surface dans l'unité d'application **3** et de séchage dans l'unité **4.** Afin de garantir une couverture uniforme des pièces à traiter, chaque tourillon peut comprendre des moyens d'indexation en rotation formés, par exemple, par deux méplats parallèles **37** permettant d'indexer le positionnement de la tête de support **30** à 180° près. Selon l'exemple illustré le plan des méplats **37** est perpendiculaire à la surface du biseau **29.**

En sortie de l'unité de séchage **4,** chaque dispositif de support et d'entraînement **6** est déchargé par un système automatisé **38** pour, par exemple, être placé sur un chariot, non représenté, destiné à être placé dans une enceinte de dépôt sous vide d'un film métallique.

Selon la forme de réalisation de l'invention décrite précédemment, la liaison en rotation entre le tourillon **23** et la tournette **12** correspondante est assurée par emboîtement la tête d'entraînement **13** dans le pied d'entraînement **26.** Toutefois, la liaison en rotation entre le tourillon **23** et la tournette **12** correspondante pourrait être assurée d'une toute autre manière.

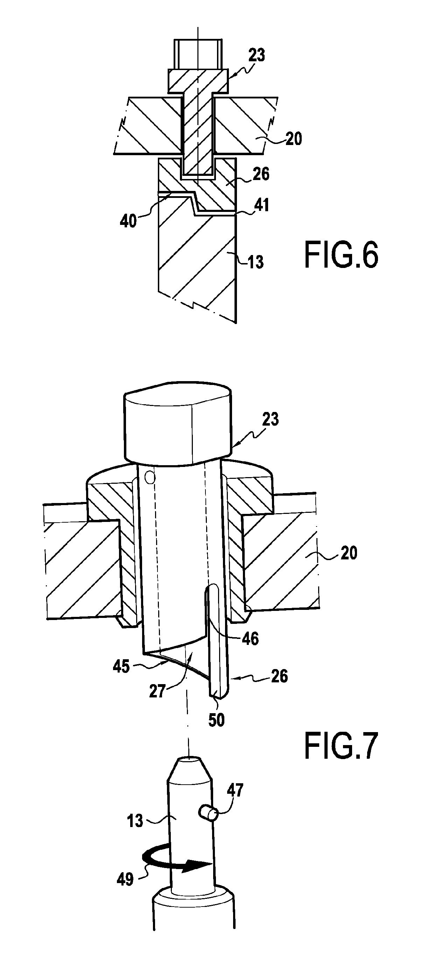

Ainsi, la figure 6 illustre une autre forme de réalisation, selon laquelle le pied d'entraînement **26** présente en partie basse à un plateau **40** destiné à venir en appui contre un plateau complémentaire **41** de la tête d'entraînement **13.** Afin d'assurer une liaison en rotation positive les plateaux **40** et **41** présentent chacun un redan central.

La figure 7 illustre encore une autre forme de réalisation selon laquelle chaque tourillon **23** présente un pied d'entraînement **26** creux. Chaque tourillon comprend en outre une surface inférieure périphérique qui définit une rampe hélicoïdale **45** s'achevant sur une fente **46** de réception d'un doigt d'entrainement **47** porté par la tête **13** la tournette correspondante. Ainsi, il est assuré une liaison positive en rotation entre la tête **13** et le tourillon **23** correspondant. Il est à noter que l'un des bords verticaux de la fente **46** s'étend jusqu'au bas du tourillon. Cette configuration permet de faciliter la mise en place du dispositif de support **6** sur le dispostif de transport **5** en animant les tournettes d'un mouvement de rotation, tel qu'indiqué par la flèche **49,** pendant la descente du dispositif de support, de manière à amener chaque doigt **47** en butée contre le bord le plus long **50** de la fente **46** avant que le tourillon **23** ne soit complètement engagé sur la tête **13.**

Bien entendu diverses autres modifications peuvent être apportées à l'invention dans le cadre des revendications annexées.

## Revendications

1. Dispositif de support et d'entrainement en rotation de plusieurs pièces devant subir un traitement de surface, destiné être adapté de manière amovible sur un dispositif de transport (**5**) d'une installation de traitement de surface, dispositif de support et d'entraînement **caractérisé en ce qu'**il comprend un châssis (**20**) comprenant :
- des moyens d'adaptation (**21**) destinés à être montés de manière amovible sur des moyens d'adaptation complémentaires (**11**) du dispositif de transport (5),
- et au moins deux tourillons (**23**) mobiles en rotation selon un axe vertical (**Δ'**) par rapport au châssis (**20**)**,** chaque tourillon (**23**) comprenant :
- en partie inférieure, un pied (**26**) d'entraînement en rotation qui est accessible depuis l'extérieur en dessous du châssis (**20**) et qui destiné à coopérer avec une tête d'entrainement complémentaire (**13**) d'une tournette (**12**) du dispositif de transport (5),
- et, en partie supérieure, une tête de support (**30**) qui accessible depuis l'extérieur au niveau du dessus du châssis (**20**) et qui est destinée à recevoir une pièce à traiter et/ou un accessoire de support d'une pièce à traiter.

2. Dispositif de support et d'entraînement selon la revendication 1, **caractérisé en ce que** les moyens d'adaptations (**21**) du châssis (**20**) sont destinés à emboîter les moyens d'adaptation complémentaires (**11**) selon un axe d'emboitement vertical (A, **A'**)**.**

3. Dispositif de support et d'entraînement selon la revendication 2, **caractérisé en ce que** l'axe d'emboîtement des moyens d'adaptation (**A'**) et les axes de rotation (**Δ'**) des tourillons sont sensiblement alignés selon un plan vertical.

4. Dispositif de support et d'entraînement selon l'une des revendications 1 à 3, **caractérisé en ce que** chaque tourillon (**23**) comprend au niveau du pied d'entraînement (**26**) des moyens (**28**) de liaison positive en rotation avec la tête d'entrainement complémentaire (**13**) de la tournette correspondante (**12**)**.**

5. Dispositif support et d'entraînement selon l'une des revendications 1 à 4, **caractérisé en ce que** chaque tourillon (**23**) comprend un pied d'entrainement (**26**) creux qui définit une chambre (**27**) d'emboîtement de la tête d'entraînement (**13**) de la tournette correspondante (**12**).

6. Dispositif de support et d'entrainement selon les revendications 4 et 5, **caractérisé en ce que** chaque tourillon (**23**) comprend à l'intérieur de la chambre (**27**), en tant que moyens de liaison positive en rotation, au moins une surface (**28**) inclinée par rapport à l'axe de rotation du tourillon et destinée à coopérer avec une surface complémentaire d'un biseau (**29**) de la tête d'entraînement (**13**) de la tournette (**12**).

7. Dispositif de support et d'entraînement selon les revendications 4 et 5, a**caractérisé en ce que** chaque tourillon (**23**) comprend une surface inférieure périphérique qui définit une rampe hélicoïdale (**45**) s'achevant sur une fente (**46**) destinée à recevoir un doigt d'entrainement (**47**) porté par la tête d'entraînement (**13**) la tournette.

8. Dispositif de support et d'entraînement selon l'une des revendications 1 à 7, **caractérisé en ce que** chaque tourillon (**23**) comprend des moyens (**37**) d'indexation en rotation.

9. Dispositif de support et d'entraînement selon l'une des revendications 1 à 8, caractérisé en que le châssis (**20**) comprend pour chaque tourillon un alésage traversant (**25**) de réception d'une bague de guidage (**24**) à l'intérieur de laquelle est engagée le tourillon (**23**).

10. Dispositif de support et d'entraînement selon la revendication 9, **caractérisé en ce que** la bague de guidage (**24**) et le tourillon (**23**) sont réalisés en matière plastique, la bague (**24**) étant engagée à force dans l'alésage traversant (**25**) et le tourillon (**23**) étant adapté pour être engagé à force dans la bague (**24**) et pour qu'après l'engagement le tourillon se trouve lié à la bague en translation axiale et libre en rotation axiale par rapport à cette dernière.

11. Dispositif de support et d'entraînement selon l'une des revendications 1 à 10, **caractérisé en ce que** le châssis (**20**) comprend des moyens (**35**) de préhension pour un système automatisé (**36**, **38**) de mise en place/retrait du dispositif de support et d'entraînement sur un dispositif de transport (**5**) correspondant.

12. Installation de traitement de surface de pièces comprenant un convoyeur (**2**) destiné à déplacer les pièces à traiter en translation dans au moins une unité de traitement (**3**), **caractérisée en ce que** le convoyeur (**2**) comprend au moins un dispositif de transport (**5**) équipé de manière amovible d'au moins un dispositif de support et d'entraînement (**6**) selon l'une des revendications 1 à 12, chaque dispositif de transport (**5**) comprenant des moyens d'adaptation (**11**) d'au moins un dispositif de support et d'entraînement (**5**) et des tournettes (**12**) comprenant chacune tête d'entraînement (**13**) destinée à coopérer avec le pied d'entraînement (**26**) d'un tourillon (**23**) du dispositif de support (**6**).

13. Installation selon la revendication 12, **caractérisé en ce que** les moyens d'adaptation d'un dispositif de support et d'entraînement comprennent au moins deux doigts verticaux (**11**) sur lesquels le dispositif de support (**6**) est destiné à venir s'emboiter selon un mouvement vertical.

14. Installation selon la revendication 12 ou 13, **caractérisée en ce que** chaque tournette (**12**) comprend une tête d'entraînement (**13**) biseautée destinée à venir s'engager dans le pied d'entraînement (**26**) d'un tourillon (**23**).

15. Installation selon l'une des revendications 12 à 14, **caractérisée en ce qu'**elle comprend un système automatisé (**37**, **38**) de mise en place/retrait du dispositif de support et d'entraînement sur un dispositif de transport correspondant.
